# EUROPÄISCHE PATENTANMELDUNG

(11) **EP 4 552 898 A1**
(43) Veröffentlichungstag der Anmeldung: **14.05.2025**
(21) Anmeldenummer: 24211657.2
(22) Anmeldetag: 08.11.2024
(51) Int. Cl.: B60L 3/04, B60L 53/10, H02J 7/00

(54) **SCHNELLLADESTATION FÜR ELEKTROFAHRZEUGE**

(30) Priorität: 08.11.2023 DE 102023130950
(71) Anmelder: Compleo Charging Solutions GmbH & Co. KG, 58513 Lüdenscheid (DE)
(72) Erfinder: Wohlfahrt, Thomas, 45721 Haltern am See (DE); Reising, Viktor, 58706 Menden (DE)
(74) Vertreter: Gottschald Patentanwälte Partnerschaft mbB

(57) **Zusammenfassung**

Die Erfindung betrifft eine Schnellladestation für Elektrofahrzeuge, wobei die Schnellladestation (1) eine Stromrichteranordnung (9) zur Wandlung einer Wechselspannung als Eingangsspannung der Schnellladestation (1) in eine Gleichspannung als Ausgangsspannung der Schnellladestation (1) aufweist, wobei die Stromrichteranordnung (9) mindestens einen Energiespeicher (10) aufweist. Es wird vorgeschlagen, dass die Stromrichteranordnung (9) eine mit dem Energiespeicher (10) zum Entladen des Energiespeichers (10) verbundene Entladeschaltung (12) aufweist, dass die Entladeschaltung (12) standardmäßig in einem entladenden Zustand ist, in dem der Energiespeicher (10) über die Entladeschaltung (12) entladen wird, dass die Entladeschaltung (12) von einer Steuereinheit (15) im Betrieb der Stromrichteranordnung (9) aktiv in einen inaktiven Zustand gebracht wird, in dem die Entladeschaltung (12) den Energiespeicher (10) nicht entlädt, und, dass die Entladeschaltung (12) bei einem Ausfall, insbesondere einer Notabschaltung, der Steuereinheit (15) automatisch in den entladenden Zustand übergeht.

## Beschreibung

Die vorliegende Erfindung betrifft eine Schnellladestation für Elektrofahrzeuge gemäß dem Oberbegriff von Anspruch 1 sowie ein Verfahren zum Betrieb einer Schnellladestation gemäß dem Oberbegriff von Anspruch 14.

Schnellladestationen, auch bekannt als high performance charger, sind Gleichstromladestationen für elektrische Fahrzeuge, insbesondere Automobile, aber auch Lastkraftfahrzeuge, Schiffe und dergleichen. Schnellladestationen liefern hohe Spannungen und Ströme und werden von Laien bedient. Sie müssen daher höchsten Sicherheitsanforderungen genügen. Im Falle der abrupten Trennung zwischen dem Elektrofahrzeug und der Schnellladestation, aber auch im Wartungsfall, wenn eine Wartungsklappe der Schnellladestation geöffnet wird, müssen in der Schnellladestation gespeicherte Energiemengen schnell abgebaut werden. Das gilt auch bei unbefugten Eingriffen, Unfällen und dergleichen, wenn ein kontrolliertes Beenden des Ladevorgangs und ein kontrolliertes Herunterfahren der Schnellladestation nicht möglich sind.

Die Erfindung geht von einer notorisch bekannten Schnellladestation mit Energiespeicher aus. Solche Energiespeicher sind in leistungselektronischen Schaltungen nahezu unerlässlich und daher meist vorhanden. Diese Energiespeicher können beispielsweise zur Glättung der Ausgangsspannung genutzt werden und weisen dann entsprechend hohe Kapazitäten auf. Selbst bei einem Ausfall einer oder mehrerer Komponenten der Schnellladestation muss die in den Energiespeichern gespeicherte Energie schnell auf ein Niveau gebracht werden, das nicht mehr gefährlich ist.

Es ist dabei eine Herausforderung, kostengünstig und schnell die in Energiespeichern gespeicherte Energie abzubauen.

Der Erfindung liegt das Problem zugrunde, die bekannte Schnellladestation derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass eine Entladeschaltung genutzt werden kann, die einen Energiespeicher entlädt, insbesondere indem sie den Energiespeicher kurzschließt. Diese Entladeschaltung wird so ausgestaltet, dass sie im Betrieb der Schnellladestation aktiv daran gehindert werden muss, den Energiespeicher zu entladen. Entfällt diese aktive Hinderungsmaßnahme, wird der Energiespeicher automatisch entladen. Auf diese Art und Weise wird der Energiespeicher extrem schnell und effektiv entladen. Ein Ausfall der Funktionalität selbst bei Zerstörung wesentlicher Teile der Schnellladestation ist unwahrscheinlich. Die erzielte Betriebssicherheit ist daher sehr hoch.

Im Einzelnen wird vorgeschlagen, dass die Stromrichteranordnung eine mit dem Energiespeicher zum Entladen des Energiespeichers verbundene Entladeschaltung aufweist, dass die Entladeschaltung standardmäßig in einem entladenden Zustand ist, in dem der Energiespeicher über die Entladeschaltung entladen wird, dass die Entladeschaltung von einer Steuereinheit im Betrieb der Stromrichteranordnung aktiv in einen inaktiven Zustand gebracht wird, in dem die Entladeschaltung den Energiespeicher nicht entlädt, und, dass die Entladeschaltung bei einem Ausfall, insbesondere einer Notabschaltung, der Steuereinheit automatisch in den entladenden Zustand übergeht.

Bei besonders bevorzugten Ausgestaltungen gemäß Anspruch 2 ist die Entladeschaltung nicht programmierbar und/oder benötigt keine Versorgungsspannung. Gemäß Anspruch 3 kann vorgesehen sein, dass ein NC Schaltelement in einem Kurzschlusszweig zur Entladung des Energiespeichers verwendet wird. Bei einer Ausgestaltung gemäß Anspruch 4 ist dann weiter vorgesehen, dass ein PTC Heizelement in dem Kurzschlusszweig angeordnet ist. In dieser Kombination wird auf einfache Art und Weise eine Entladung des Energiespeichers erreicht und gleichzeitig sichergestellt, dass der Entladestrom nicht zu groß wird. Steigt der Entladestrom wird das PTC Heizelement warm und sein Widerstand steigt, womit der Entladestrom sinkt.

Die Ansprüche 5 und 6 geben eine bevorzugte Topologie der Stromrichteranordnung an.

Gemäß Anspruch 7 kann vorgesehen sein, dass für Normalfälle eine andere oder zusätzliche Entladung der Energiespeicher vorgesehen ist. So kann beispielsweise sichergestellt werden, dass das PTC Heizelement nicht verschleißt.

Anspruch 8 betrifft eine bevorzugte Ausgestaltung, wonach die Schnellladestation ein oder mehrere Leistungsmodule aufweist, die gegebenenfalls flexibel auf mehrere Anschlusspunkte verteilbar sind.

Eine weitere bevorzugte Ausgestaltung, die auch eigenständige Relevanz unabhängig von der Entladeschaltung aufweist und mit den weiteren hierin beschriebenen Ausgestaltungen in beliebiger Kombination zusammenwirken kann, ist Gegenstand von Anspruch 9. Demnach kann vorgesehen sein, dass eine Schnellladestation mit mindestens einem Leistungsmodul eine Überwachungsschaltung aufweist, die vorzugsweise über ein Abschaltsignal zur Notabschaltung einer Steuereinheit führen kann. In Kombination mit der vorgeschlagenen Entladeschaltung wird so sehr schnell und mit sehr wenig steuerungstechnischem Aufwand, und daher robust, eine Notabschaltung inklusive Entladung erreicht.

Bei einer Ausgestaltung gemäß Anspruch 10 ist vorgesehen, dass mehrere Überwachungsschaltungen in galvanisch getrennten Bereichen des Leistungsmoduls angeordnet sind. Gemäß Anspruch 11 kann dann weiter vorgesehen sein, dass ein Abschalten durch eine Überwachungsschaltung kaskadierend mindestens eine weitere Überwachungsschaltung triggert. So ist keine galvanisch getrennte Übertragung des Abschaltsignals notwendig, sondern die unterschiedlichen Teile des Leistungsmoduls schalten durch ihre eigenen Überwachungsschaltungen ab.

Eine weitere bevorzugte Ausgestaltung, die auch eigenständige Relevanz unabhängig von der Entladeschaltung aufweist und mit den weiteren hierin beschriebenen Ausgestaltungen in beliebiger Kombination zusammenwirken kann, ist Gegenstand von Anspruch 12. Demnach kann bei einer Schnellladestation vorgesehen sein, dass ein Gesamtgrenzwert eines Anschlusspunktes für den Ausgangsstrom auf die Leistungsmodule verteilt wird. Eine weitere Abschaltung bei zu hohem Ausgangsstrom am Anschlusspunkt kann so sogar unterbleiben, wodurch die Schnellladestation günstiger wird.

Eine weitere bevorzugte Ausgestaltung, die auch eigenständige Relevanz unabhängig von der Entladeschaltung aufweist und mit den weiteren hierin beschriebenen Ausgestaltungen in beliebiger Kombination zusammenwirken kann, ist Gegenstand von Anspruch 13. Es kann demnach bei einer Schnellladestation vorgesehen sein, dass nicht alle Leistungsmodule zu einem bestimmten Zeitpunkt aktiv sind oder gleich viel Leistung stellen. Sind die Leistungsmodule dann bidirektional ausgestaltet, können also auch, zumindest etwas, Leistung aufnehmen oder gar ans Netz abgeben, kann im Falle eines Notabschaltens ein Leistungsmodul auch die in einem anderen Leistungsmodul gespeicherte Energie abbauen. So wird diese Energie insgesamt schneller abgebaut und die Betriebssicherheit erhöht.

Nach einer weiteren Lehre gemäß Anspruch 14, der eigenständige Bedeutung zukommt, wird ein Verfahren zum Betrieb einer Schnellladestation beansprucht.

Dabei ist wesentlich, dass die Stromrichteranordnung eine mit dem Energiespeicher zum Entladen des Energiespeichers verbundene Entladeschaltung aufweist, dass die Entladeschaltung standardmäßig in einem entladenden Zustand ist, in dem der Energiespeicher über die Entladeschaltung entladen wird, dass die Entladeschaltung von einer Steuereinheit im Betrieb der Stromrichteranordnung aktiv in einen inaktiven Zustand gebracht wird, in dem die Entladeschaltung den Energiespeicher nicht entlädt, und, dass die Entladeschaltung bei einem Ausfall, insbesondere einer Notabschaltung, der Steuereinheit automatisch in den entladenden Zustand übergeht.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation,
- Fig. 2: einen Blick in die Schnellladestation und auf die Leistungsmodule,
- Fig. 3: Gleichspannungsschienen mit einer Schaltmatrix und Anschlusspunkten sowie damit verbundene Leistungsmodule mit Stromrichteranordnung und Filterstufen,
- Fig. 4: einen AC/DC Wandler,
- Fig. 5: einen DC/DC Wandler mit Überwachungsschaltungen (in Fig. 4 nicht dargestellt) und
- Fig. 6: eine Übersicht über das Leistungsmodul und die Signal- und Leistungspfade im Leistungsmodul.

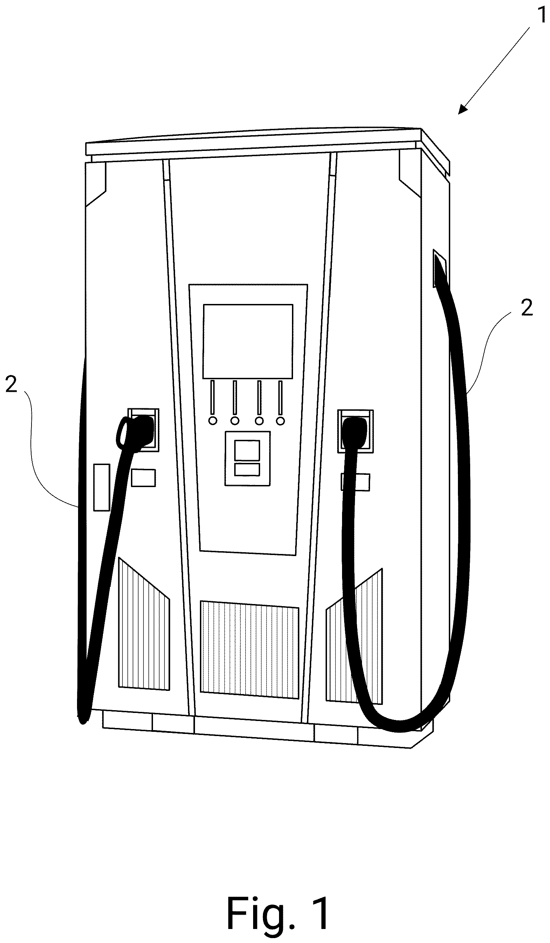

Fig. 1 zeigt eine Außenansicht einer vorschlagsgemäßen Schnellladestation 1 für Elektrofahrzeuge. Diese weist mindestens einen Anschlusspunkt 2 für ein Elektrofahrzeug, hier ein fest angeschlagenes Ladekabel, auf. Vorzugsweise weist die Schnellladestation 1 mindestens, hier genau, zwei Anschlusspunkte 2 auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

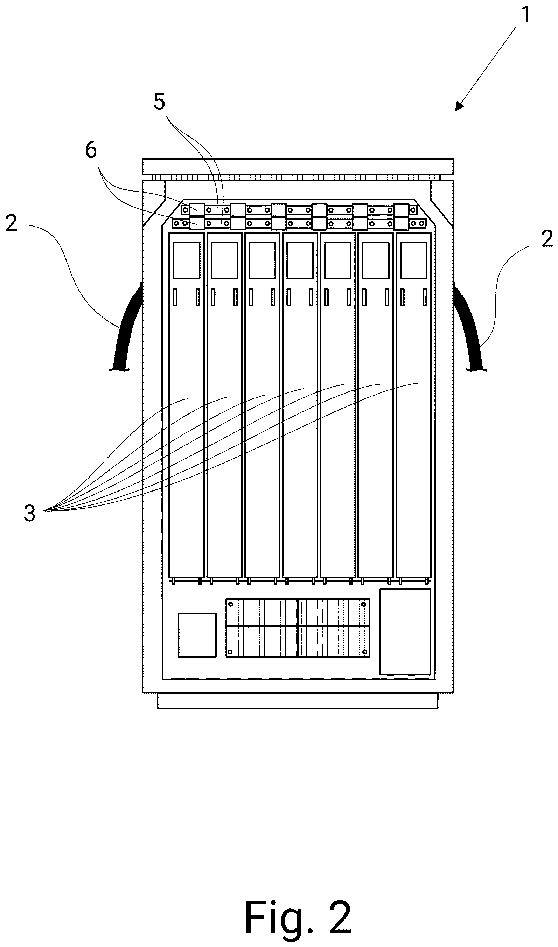

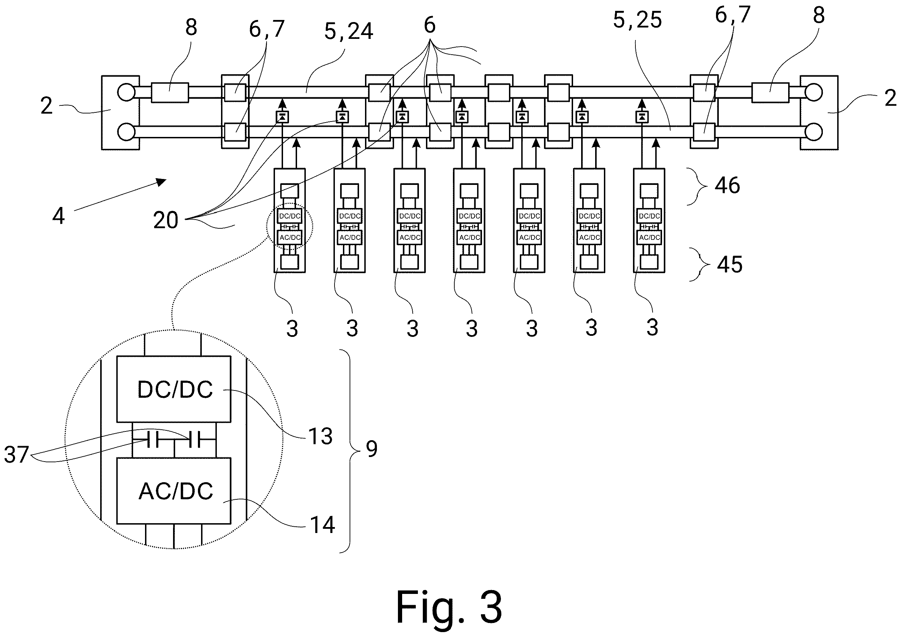

Wie in der geöffneten Ansicht in Fig. 2 erkennbar ist, weist die Schnellladestation 1 mindestens ein einzeln handhabbares Leistungsmodul 3 auf. Hier weist die Schnellladestation 1 sieben Leistungsmodule 3 auf, die jeweils einen Teil der Gesamtleistung der Schnellladestation 1 zur Verfügung stellen, hier beispielsweise jeweils 30 kW. Die Leistungsmodule 3 können hier und vorzugsweise flexibel auf die Anschlusspunkte 2 aufgeteilt werden. Die Aufteilung ermöglicht hier und vorzugsweise eine Schaltmatrix 4 (Fig. 3). Erkennbar sind im oberen Bereich der Schnellladestation 1 Gleichspannungsschienen 5 zur Verteilung der Ausgangsleistung der Leistungsmodule 3 auf die Anschlusspunkte 2. Der Wechselspannungseingang ist hier im unteren Bereich angeordnet und nicht dargestellt.

Der Begriff "einzeln handhabbar" ist hier breit zu verstehen. Das Leistungsmodul 3 wiegt hier beispielsweise etwa 39 kg, ist also nicht leicht handhabbar. Es ist jedoch einzeln herausnehmbar und die Komponenten des Leistungsmoduls 3 sind gerade nicht einzeln in der Schnellladestation 1 verbaut.

Die Gleichspannungsschienen 5 sind hier und vorzugsweise durch Schalter 6, hier Schütze, derart unterbrochen bzw. unterbrechbar, dass die Gleichspannungsschienen 5 in zwei beliebig lange Stränge an Leistungsmodulen 3 aufteilbar sind, die den beiden Anschlusspunkten 2 zugeordnet sind. Es können also beispielsweise alle Leistungsmodule 3 einem Anschlusspunkt 2 zugeordnet werden oder die Gleichspannungsschienen 5 werden irgendwo zwischen den Anschlusspunkten 2 aufgetrennt und es entstehen so zwei Stränge. Die Anordnung der Schalter 6 wird daher als Schaltmatrix 4 bezeichnet.

Weiter zeigt Fig. 3 hier und vorzugsweise vorhandene Ausgangsschalter 7 pro Anschlusspunkt 2 und eine ebenfalls vorzugsweise vorhandene Ausgangssicherung 8 pro Anschlusspunkt 2. Die äußeren beiden Leistungsmodule 3 sind gemäß Fig. 3 und vorzugsweise nicht getrennt einem Anschlusspunkt 2 zuordenbar, sodass zwar einem Anschlusspunkt 2 alle Leistungsmodule 3 zugeordnet werden können, bei Verwendung beider Anschlusspunkte 2 aber mindestens zwei Leistungsmodule 3 einem Anschlusspunkt 2 zugeordnet sind.

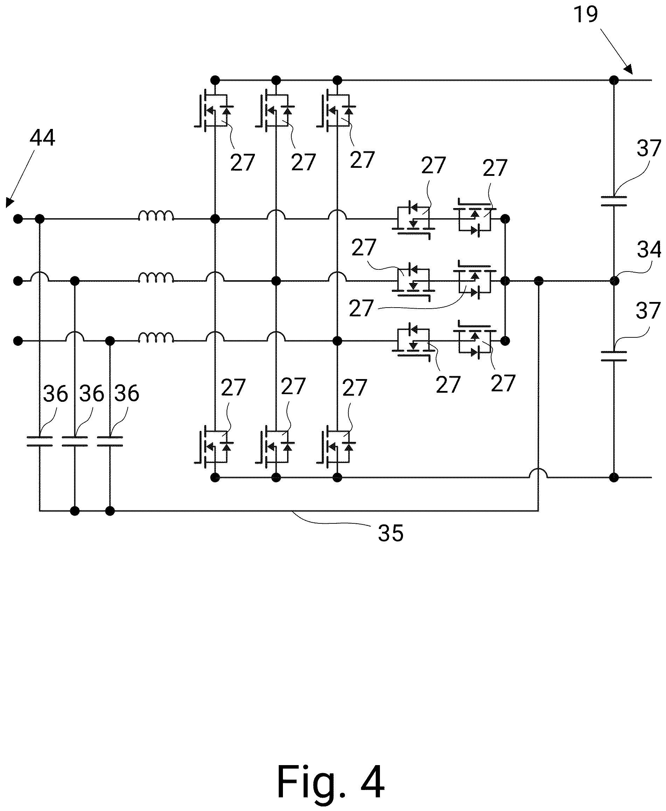

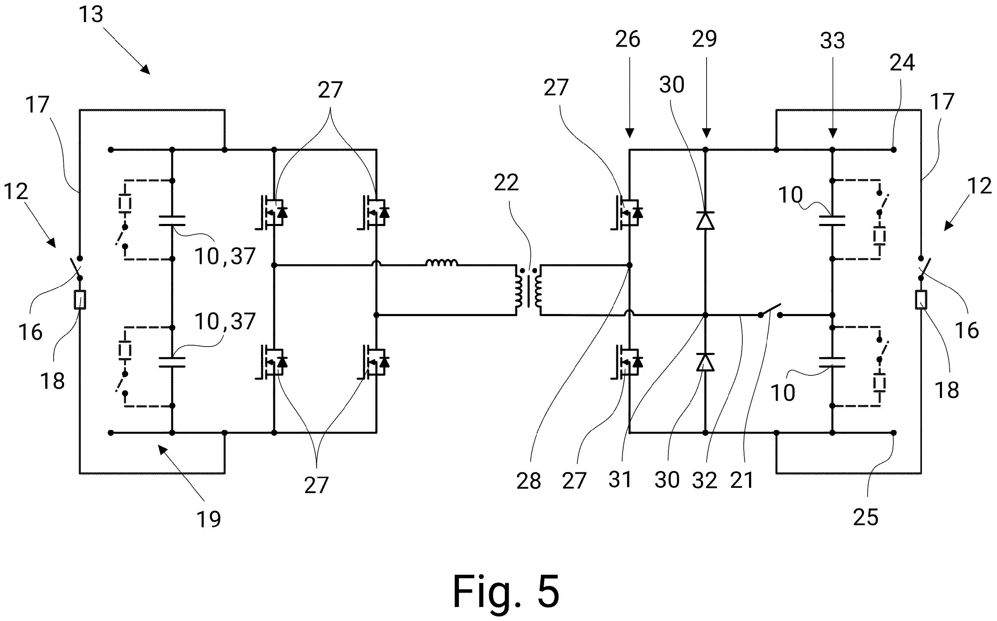

Das in den Figuren dargestellte und insoweit bevorzugte Ausführungsbeispiel betrifft eine Schnellladestation 1 für Elektrofahrzeuge, wobei die Schnellladestation 1 eine Stromrichteranordnung 9 (Fig. 4 und Fig. 5) zur Wandlung einer Wechselspannung als Eingangsspannung der Schnellladestation 1 in eine Gleichspannung als Ausgangsspannung der Schnellladestation 1 aufweist, wobei die Stromrichteranordnung 9 mindestens einen Energiespeicher 10 aufweist. Hier und vorzugsweise ist der Energiespeicher 10 ein Kondensator, insbesondere ein Glättungskondensator zwischen zwei Gleichspannungsanschlüssen 11.

Vorgeschlagen wird nun, dass die Stromrichteranordnung 9 eine mit dem Energiespeicher 10 zum Entladen des Energiespeichers 10 verbundene Entladeschaltung 12 aufweist. Die Entladeschaltung 12 ist standardmäßig, insbesondere in einem Zustand ohne irgendeine Einwirkung, in einem entladenden Zustand. In dem entladenden Zustand wird der Energiespeicher 10 über die Entladeschaltung 12 entladen. Fig. 5 zeigt die Entladeschaltung 12, die bei beispielhaft insgesamt vier Kondensatoren zum Einsatz kommt. Die Kondensatoren sind hier und vorzugsweise Glättungskondensatoren am Eingang und/oder am Ausgang eines DC/DC Wandlers 13, der mit einer beispielhaften Topologie in Fig. 5 dargestellt ist. Der Eingang (links) in Fig. 5 entspricht dem Ausgang (rechts) des in Fig. 4 dargestellten AC/DC Wandlers 14.

Die Entladeschaltung 12 wird von einer Steuereinheit 15 im Betrieb der Stromrichteranordnung 9 aktiv in einen inaktiven Zustand gebracht, in dem die Entladeschaltung 12 den Energiespeicher 10 nicht entlädt. Bei einem Ausfall, insbesondere einer Notabschaltung, der Steuereinheit 15 geht die Entladeschaltung 12 automatisch in den entladenden Zustand über. Die Steuereinheit 15 muss die Entladeschaltung 12 zum Betrieb der Stromrichteranordnung 9 daher aktiv im inaktiven Zustand halten.

Bevorzugt ist es dabei so, dass die Entladeschaltung 12 nicht programmierbar ist, und/oder, dass die Entladeschaltung 12 keine Versorgungsspannung benötigt und verwendet, um von dem inaktiven Zustand in den entladenden Zustand überzugehen. Hier und vorzugsweise weist die Entladeschaltung 12 also keinerlei programmierbare Logik auf. Das schließt FPGAs mit ein, die ebenfalls nicht als Teil der Entladeschaltung 12 vorhanden sind. Weiter bevorzugt weist die Entladeschaltung 12 keinerlei Logik auf.

Hier und vorzugsweise ist es so, dass die Entladeschaltung 12 ein normally closed (NC) Schaltelement 16 aufweist, das in einem Kurzschlusszweig 17 angeordnet ist, über den der Energiespeicher 10 entladen wird.

In dem Kurzschlusszweig 17 ist hier und vorzugsweise ein positive temperature coefficient (PTC) Heizelement 18 angeordnet ist, das durch eine temperaturabhängige Erhöhung des elektrischen Widerstands des Kurzschlusszweigs 17 einen Entladestrom des Energiespeichers 10 begrenzt. Fig. 4 zeigt zwei durchgezogen dargestellte Entladeschaltungen 12. Alternativ könnten jedoch auch, wie gestrichelt dargestellt, vier Entladeschaltungen 12 vorgesehen sein. Denkbar ist, für jeden Glättungskondensator des DC/DC Wandlers 13 eine Entladeschaltung 12 vorzusehen.

Hier und vorzugsweise verhält es sich so, dass, solange die Steuereinheit 15 aktiv eine Spannung an dem NC Schaltelement 16 anlegt, dieses geöffnet ist und der Energiespeicher 10 verwendet werden kann. Fällt die Spannung der Steuereinheit 15 weg, insbesondere weil die Steuereinheit 15 notabgeschaltet wurde, wird der Energiespeicher 10 sofort entladen, wobei der Entladestrom durch das PTC Heizelement 18 begrenzt wird.

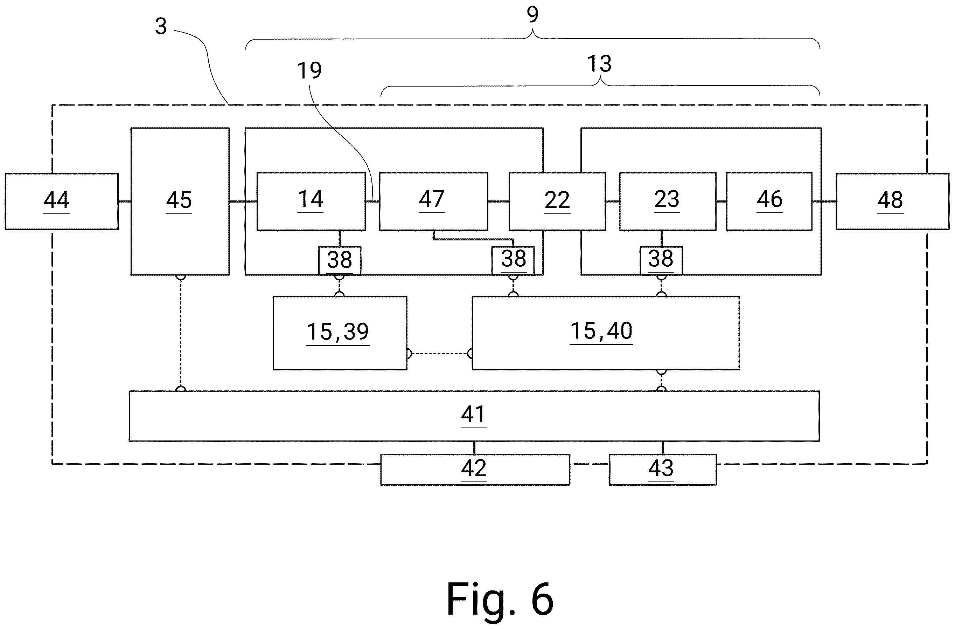

Wie Fig. 6 zusammengesetzt und die Figs. 4 und 5 einzeln zeigen, kann vorgesehen sein, dass die Stromrichteranordnung 9 einen AC/DC Wandler 14, einen DC/DC Wandler 13 und ausgangsseitig des AC/DC Wandlers 14 sowie eingangsseitig des DC/DC Wandlers 13 einen Verbindungskreis 19 aufweist. Vorzugsweise, trennt der DC/DC Wandler 13 galvanisch. Zusätzlich oder alternativ kann zwischen der Stromrichteranordnung 9 und einem Anschlusspunkt 2 der Schnellladestation 1 eine Diode 20 angeordnet sein (Fig. 3). Der Verbindungskreis 19 weist hier zwei Kondensatoren auf, die die Glättungskondensatoren des DC/DC Wandlers 13 (eingangsseitig) bilden. Genauso bilden diese ausgangsseitige Glättungskondensatoren des AC/DC Wandlers 14. Auf die Zuordnung kommt es hier nicht an. Der Verbindungskreis 19 kann auch nur aus einer elektrischen Verbindung ohne Bauelemente bestehen.

Allgemein gesprochen ist hier und vorzugsweise vorgesehen, dass ein Energiespeicher 10 mit Entladeschaltung 12 eingangsseitig der galvanischen Trennung und/oder ausgangsseitig der galvanischen Trennung, insbesondere vor der Diode 20, angeordnet ist.

In Fällen, in denen die Steuereinheit 15 nicht notabgeschaltet wird, ist hier und vorzugsweise vorgesehen, dass die Steuereinheit 15 in einer Abschaltroutine den Energiespeicher 10 durch ein Ansteuern von Schaltelementen 21 des DC/DC Wandlers 13 und/oder des AC/DC Wandlers 14 entlädt. Bei dem Ausfall der Steuereinheit 15 hingegen führt die Steuereinheit 15 die Abschaltroutine nicht durch und steuert vorzugsweise die Schaltelementen 21 DC/DC Wandlers 13 und/oder des AC/DC Wandlers 14 nicht weiter an. Somit entfällt die normale Art des Entladens und die Entladeschaltung 12 kommt zum Einsatz. Entsprechend ist vorzugsweise vorgesehen, dass die Schaltelemente 21 des DC/DC Wandlers 13 und/oder des AC/DC Wandlers 14 normally open (NO) Schaltelemente 21 sind.

Wie in Fig. 5 dargestellt ist es hier und vorzugsweise so, dass die Stromrichteranordnung 9 einen DC/DC Wandler 13, insbesondere Dual-Active-Bridge DC/DC Wandler 13, aufweist, der eine Eingangsspannung des DC/DC Wandlers 13 herauf und herabsetzen kann.

Vorzugsweise ist es so, dass der DC/DC Wandler 13 in einem ersten Funktionszustand eine ausgangsseitige Wechselspannung des Transformators 22 gleichrichtet und in einem zweiten Funktionszustand als Ladungspumpe fungiert und die ausgangsseitige Wechselspannung des Transformators 22 gleichrichtet und erhöht, insbesondere verdoppelt. Der DC/DC Wandler 13 ist vorliegend eine abgewandelte Dual-Active-Bridge. Wird ein dargestelltes Schaltelement 21 geschlossen, fungiert die Ausgangsseite 23 als Ladungspumpe. Ist das Schaltelement 21 geöffnet, wird die Ausgangsspannung des Transformators 22 nur gleichgerichtet. Zum weiteren Verständnis wird auch auf die EP 4 109 724 A1 verwiesen.

Im Detail ist hier und vorzugsweise vorgesehen, dass der DC/DC Wandler 13 ausgangsseitig einen DC+ Anschluss 24 und einen DC- Anschluss 25 aufweist, dass der DC/DC Wandler 13 ausgangsseitig einen ersten Schaltungszweig 26 zwischen dem DC+ Anschluss 24 und dem DC- Anschluss 25 aufweist, der zwei in Reihe geschaltete Halbleiterschaltelemente 27, insbesondere Transistoren, aufweist, zwischen denen ein erster ausgangsseitiger Anschluss 28 des Transformators 22 angeschlossen ist, dass der DC/DC Wandler 13 ausgangsseitig einen zweiten Schaltungszweig 29 zwischen dem DC+ Anschluss 24 und dem DC- Anschluss 25 aufweist, der zwei in Reihe geschaltete Halbleiterbauelemente 30, insbesondere Dioden 20, aufweist, zwischen denen ein zweiter ausgangsseitiger Anschluss 31 des Transformators 22 und ein Verbindungszweig 32 angeschlossen sind, dass der DC/DC Wandler 13 ausgangsseitig einen dritten Schaltungszweig 33 zwischen dem DC+ Anschluss 24 und dem DC- Anschluss 25 aufweist, der zwei in Reihe geschaltete Kondensatoren aufweist, zwischen denen der Verbindungszweig 32 angeschlossen ist, dass der Verbindungszweig 32 ein Schaltelement 21 aufweist, mit dem der Verbindungszweig 32 geschlossen und aufgetrennt werden kann, wodurch ein Wechsel zwischen den Funktionszuständen bewirkt wird. Im ersten Funktionszustand ist das Schaltelement 21 hier und vorzugsweise offen, im zweiten geschlossen. Statt der Dioden 20 können insbesondere auch Transistoren vorgesehen sein, wodurch eine bidirektionale Verwendung ermöglicht werden kann. Das Schaltelement 21 kann ein Relais oder ein Schütz oder ein Halbleiterschaltelement 27 sein.

Weiter und in Fig. 4 dargestellt ist hier und vorzugsweise vorgesehen, dass die Stromrichteranordnung 9 einen T-Typ AC/DC Wandler 14 aufweist, dass der AC/DC Wandler 14 einen Neutralpunkt 34 und einen DC Ausgang mit Neutralpunktanbindung 35 aufweist, dass der Neutralpunkt 34 über mindestens einen, vorzugsweise drei, Kopplungskondensatoren 36 an den Eingang des AC/DC Wandlers 14 gekoppelt ist, vorzugsweise, dass der Neutralpunkt 34 über je einen Kopplungskondensator 36 an drei Phasen des Eingangs des AC/DC Wandlers 14 gekoppelt ist. Hier und vorzugsweise handelt es sich bei dem T-Typ AC/DC Wandler 14 um einen Vienna Gleichrichter. Eine solche Gleichtaktankopplung reduziert die selbstverursachten Störungen, wodurch die Regeldynamik der Stromrichteranordnung 9 verbessert wird. Der AC/DC Wandler 14 und der DC/DC Wandler 13 sind hier und vorzugsweise über den Verbindungskreis 19 verbunden, der zwei Verbindungskreiskondensatoren 37 aufweist.

Weiter ist hier und vorzugsweise vorgesehen, dass die Schnellladestation 1 mindestens ein Leistungsmodul 3 aufweist, das die Stromrichteranordnung 9 aufweist, vorzugsweise, dass die Schnellladestation 1 mehrere Leistungsmodule 3 mit Stromrichteranordnungen 9 aufweist, weiter vorzugsweise, dass die Leistungsmodule 3 flexibel auf mindestens zwei Anschlusspunkte 2 der Schnellladestation 1 verteilbar sind (Figs. 2 und 3). Bezüglich der Stromrichteranordnungen 9 der weiteren Leistungsmodule 3 darf auf die bisherigen Erläuterungen zur Stromrichteranordnung 9 eines Leistungsmoduls 3 verwiesen werden. Die Diode 20 zwischen Stromrichteranordnung 9 und Anschlusspunkt 2 ist hier und vorzugsweise jeweils einem Leistungsmodul 3 zugeordnet. In diesem Fall sind die Leistungsmodule 3 nicht bidirektional verwendbar.

Mit Blick nun auf die Notabschaltung selbst ist hier und vorzugsweise vorgesehen, dass das Leistungsmodul 3 mindestens eine Überwachungsschaltung 38 aufweist, die insbesondere einen Strom und/oder eine Spannung und/oder eine Temperatur überwacht und bei Überschreiten eines Grenzwertes ein Abschaltsignal erzeugt. Der Grenzwert betrifft dabei hier und vorzugsweise zumindest eine zu hohe Temperatur und/oder einen zu hohen Strom und/oder eine zu hohe Spannung. Vorzugsweise führt das Abschaltsignal zu einer Notabschaltung der Steuereinheit 15, wodurch die Entladeschaltung 12 automatisch in den entladenden Zustand übergeht. Fig. 6 zeigt, dass ein Leistungsmodul 3 hier und vorzugsweise eine AC/DC Treiberstufe 39 und/oder eine DC/DC Treiberstufe 40 und/oder eine übergeordnete Leistungsmodulsteuereinheit 41 aufweist, die mit einem externen 24V Netzteil über einen Hilfsspannungseingang 42 verbunden und/oder einen CAN-Anschluss 43 aufweisen kann.

Die beschriebene Steuereinheit 15 ist hier und vorzugsweise die AC/DC Treiberstufe 39 und/oder die DC/DC Treiberstufe 40, d.h. es können auch zwei Steuereinheiten 15 vorhanden sein, die jeweils mindestens eine Entladeschaltung 12 aktiv im inaktiven Zustand halten und/oder die durch ein Abschaltsignal einer der mindestens einen Überwachungsschaltungen 38 unmittelbar abgeschaltet werden. Alternativ kann auch die übergeordnete Leistungsmodulsteuereinheit 41 die Steuereinheit 15 oder eine Steuereinheit 15 bilden.

Weiter zeigt Fig. 6 einen AC-Eingang 44, eine Eingangsfilterstufe 45 und eine Ausgangsfilterstufe 46. Gestrichelte Kommunikationslinien zeigen vorzugsweise galvanisch getrennte Kommunikationen an, beispielsweise über Optokoppler.

Weiter ist hier und vorzugsweise vorgesehen, dass das Leistungsmodul 3 mindestens zwei galvanisch getrennte Überwachungsschaltungen 38 aufweist, die jeweils insbesondere einen Strom und/oder eine Spannung und/oder eine Temperatur überwachen und bei Überschreiten eines Grenzwertes ein Abschaltsignal erzeugen. Vorzugsweise führt jedes der Abschaltsignale zu einer Notabschaltung der Steuereinheit 15 wodurch die Entladeschaltung 12 automatisch in den entladenden Zustand übergeht. Hier und vorzugsweise ist es so, dass das Abschaltsignal einer Überwachungsschaltung 38 die AC/DC Treiberstufe 39 abschaltet und das Abschaltsignal einer anderen Überwachungsschaltung 38 die DC/DC Treiberstufe 40 abschaltet.

Allgemeiner ist hier und vorzugsweise vorgesehen, dass eine der galvanisch getrennten Überwachungsschaltungen 38 eingangsseitig der galvanischen Trennung des DC/DC Wandlers 13 und eine der galvanisch getrennten ausgangsseitig der galvanischen Trennung des DC/DC Wandlers 13 angeordnet ist und dass ein Abschaltsignal der ausgangsseitig der galvanischen Trennung des DC/DC Wandlers 13 angeordneten Überwachungsschaltung 38 ein Abschaltsignal an eine Treiberstufe der Ausgangsseite 23 des DC/DC Wandlers 13 sendet, die in Reaktion auf das Abschaltsignal abschaltet. Hier ist die DC/DC Treiberstufe 40 für die Eingangsseite 47 und die Ausgangsseite 23 des DC/DC Wandlers 13 zuständig und an mindestens eine, hier beide, Seiten galvanisch getrennt angebunden. Getrennte Treiberstufen, die galvanisch getrennt kommunizieren, wären auch denkbar.

In Reaktion auf das Abschalten der Treiberstufe der Ausgangsseite 23 des DC/DC Wandlers 13, hier der DC/DC Treiberstufe 40, detektiert die Überwachungsschaltung 38 eingangsseitig der galvanischen Trennung des DC/DC Wandlers 13 eine Überschreitung des Grenzwerts und erzeugt ein Abschaltsignal. Das liegt hier und vorzugsweise daran, dass bei Abschaltung des DC/DC Wandlers 13 der Verbindungskreis 19 nicht stabil ist. In einer Ausgestaltung ist also keine Signalübertragung über eine galvanische Trennung zum Abschalten beider Seiten der galvanischen Trennung des DC/DC Wandlers 13 nötig oder vorgesehen. Sofern die Überwachungsschaltung 38 galvanisch getrennt mit der jeweiligen Treiberstufe kommuniziert, ist außer dieser Kommunikation keine galvanisch getrennte Kommunikation für das Abschalten nötig oder vorgesehen.

Die Begriffe "Signal" und "senden" sind weit auszulegen, das Signal kann auch eine direkte Notabschaltung einer Versorgungsspannung sein. Hier und vorzugsweise ist zumindest eine Überwachungsschaltung 38 für die Spannung AC-seitig, am DC-Ausgang 48 des Leistungsmoduls 3 und im Verbindungskreis 19 vorgesehen. Hier und vorzugsweise ist zumindest eine Überwachungsschaltung 38 für den Strom AC-seitig und am DC-Ausgang 48 des Leistungsmoduls 3 vorgesehen. Die Überwachungsschaltung 38 kann einen Komparator aufweisen.

Eine weitere bevorzugte Ausgestaltung sieht vor, dass die Leistungsmodule 3 je mindestens eine Überwachungsschaltung 38 aufweist, die bei einer Überschreitung eines Grenzwertes des Ausgangsstroms des Leistungsmoduls 3 ein Abschaltsignal erzeugt und dass die Grenzwerte der Überwachungsschaltungen 38 der Leistungsmodule 3 in Summe maximal 10 % über einem Grenzwert eines Anschlusspunktes 2 liegen. Darf der Anschlusspunkt 2 maximal 20 % mehr Ausgangsstrom liefern als seinen Nennstrom sind beispielsweise die Ausgangsströme der Leistungsmodule 3 auf ca. 3 % ihres Nennstroms begrenzt, der wiederum nur einen Teil des gesamten Nennstroms beträgt, hier beispielsweise ein Siebtel (bei sieben Leistungsmodulen 3). Vorzugsweise ergeben die Grenzwerte der Leistungsmodule 3 in Summe maximal den Grenzwert des Anschlusspunktes 2, weiter vorzugsweise liegen die Grenzwerte der Leistungsmodule 3 in Summe unter dem Grenzwert des Anschlusspunktes 2.

In einer weiteren bevorzugten Ausgestaltung ist vorgesehen, dass die Leistungsmodule 3 ausgangsseitig bidirektional miteinander verbindbar sind. Die dargestellte Diode 20 ist dann nicht vorgesehen. Es kann dann der Fall sein, dass bei einer Notabschaltung mindestens eines Leistungsmoduls 3, insbesondere der Schnellladestation 1, mindestens ein Leistungsmodul 3 über eine Entladeschaltung 12 des Leistungsmoduls 3 einen Energiespeicher 10 eines anderen Leistungsmoduls 3, insbesondere nur teilweise zugleich mit einer Entladeschaltung 12 des anderen Leistungsmoduls 3, entlädt. Sind zwei Leistungsmodule 3 parallel geschaltet, von denen nur eines aktiv ist, kann das andere beim Entladen unterstützen.

Die Schaltmatrix 4 wird hier und vorzugsweise so angesteuert, dass zumindest manchmal zwei Leistungsmodule 3 unterschiedlich viel Leistung stellen. Vorzugsweise wird die Schaltmatrix 4 so angesteuert, dass manchmal ein Leistungsmodul 3 keine Leistung stellt und trotzdem parallel zu einem anderen Leistungsmodul 3 geschaltet ist, das Leistung stellt. Es kann somit vorgesehen sein, dass ein Leistungsmodul 3, das keine Leistung stellt, bei einem Ladevorgang parallel zu einem anderen Leistungsmodul 3 geschaltet ist, das Leistung stellt. Bei dem Ausfall der Steuereinheit 15 des Leistungsmoduls 3, das die Leistung stellt, der vorzugsweise, insbesondere durch kaskadierende Auslösungen der Überwachungsschaltungen 38 eines oder mehrerer Leistungsmodule 3, auf eine Notabschaltung zurückgeht, entlädt die Entladeschaltung 12 des Leistungsmoduls 3, das keine Leistung gestellt hat, zusammen mit der Entladeschaltung 12 des Leistungsmoduls 3, das Leistung gestellt hat, einen Energiespeicher 10 des Leistungsmoduls 3, das Leistung gestellt hat.

Vorgeschlagen wird gemäß einer weiteren Lehre ein Verfahren zum Betrieb einer vorschlagsgemäßen Schnellladestation 1 für Elektrofahrzeuge, wobei die Schnellladestation 1 eine Stromrichteranordnung 9 zur Wandlung einer Wechselspannung als Eingangsspannung der Schnellladestation 1 in eine Gleichspannung als Ausgangsspannung der Schnellladestation 1 aufweist, wobei die Stromrichteranordnung 9 mindestens einen Energiespeicher 10 aufweist.

Wesentlich nach dieser weiteren Lehre ist, dass die Stromrichteranordnung 9 eine mit dem Energiespeicher 10 zum Entladen des Energiespeichers 10 verbundene Entladeschaltung 12 aufweist, dass die Entladeschaltung 12 standardmäßig in einem entladenden Zustand ist, in dem der Energiespeicher 10 über die Entladeschaltung 12 entladen wird, dass die Entladeschaltung 12 von einer Steuereinheit 15 im Betrieb der Stromrichteranordnung 9 aktiv in einen inaktiven Zustand gebracht wird, in dem die Entladeschaltung 12 den Energiespeicher 10 nicht entlädt, und, dass die Entladeschaltung 12 bei einem Ausfall, insbesondere einer Notabschaltung, der Steuereinheit 15 automatisch in den entladenden Zustand übergeht.

Auf alle Ausführungen zu der vorschlagsgemäßen Schnellladestation 1 darf verwiesen werden.

### Bezugszeichenliste

- 1: Schnellladestation
- 2: Anschlusspunkt
- 3: Leistungsmodul
- 4: Schaltmatrix
- 5: Gleichspannungsschiene
- 6: Schalter
- 7: Ausgangsschalter
- 8: Ausgangssicherung
- 9: Stromrichteranordnung
- 10: Energiespeicher
- 11: Gleichspannungsanschluss
- 12: Entladeschaltung
- 13: DC/DC Wandler
- 14: AC/DC Wandler
- 15: Steuereinheit
- 16: NC Schaltelement
- 17: Kurzschlusszweig
- 18: PTC Heizelement
- 19: Verbindungskreis
- 20: Diode
- 21: Schaltelement
- 22: Transformator
- 23: Ausgangsseite
- 24: DC+ Anschluss
- 25: DC- Anschluss
- 26: erster Schaltungszweig
- 27: Halbleiterschaltelemente
- 28: erster ausgangsseitiger Anschluss
- 29: zweiter Schaltungszweig
- 30: Halbleiterbauelement
- 31: zweiter ausgangsseitiger Anschluss
- 32: Verbindungszweig
- 33: dritter Schaltungszweig
- 34: Neutralpunkt
- 35: Neutralpunktanbindung
- 36: Kopplungskondensator
- 37: Verbindungskreiskondensator
- 38: Überwachungsschaltung
- 39: AC/DC Treiberstufe
- 40: DC/DC Treiberstufe
- 41: Leistungsmodulsteuereinheit
- 42: Hilfsspannungseingang
- 43: CAN-Anschluss
- 44: AC-Eingang
- 45: Eingangsfilterstufe
- 46: Ausgangsfilterstufe
- 47: Eingangsseite
- 48: DC-Ausgang

## Patentansprüche

1. Schnellladestation für Elektrofahrzeuge, wobei die Schnellladestation (1) eine Stromrichteranordnung (9) zur Wandlung einer Wechselspannung als Eingangsspannung der Schnellladestation (1) in eine Gleichspannung als Ausgangsspannung der Schnellladestation (1) aufweist, wobei die Stromrichteranordnung (9) mindestens einen Energiespeicher (10) aufweist,
**dadurch gekennzeichnet,**
**dass** die Stromrichteranordnung (9) eine mit dem Energiespeicher (10) zum Entladen des Energiespeichers (10) verbundene Entladeschaltung (12) aufweist, dass die Entladeschaltung (12) standardmäßig in einem entladenden Zustand ist, in dem der Energiespeicher (10) über die Entladeschaltung (12) entladen wird, dass die Entladeschaltung (12) von einer Steuereinheit (15) im Betrieb der Stromrichteranordnung (9) aktiv in einen inaktiven Zustand gebracht wird, in dem die Entladeschaltung (12) den Energiespeicher (10) nicht entlädt, und, dass die Entladeschaltung (12) bei einem Ausfall, insbesondere einer Notabschaltung, der Steuereinheit (15) automatisch in den entladenden Zustand übergeht.

2. Schnellladestation nach Anspruch 1, **dadurch gekennzeichnet, dass** die Entladeschaltung (12) nicht programmierbar ist, und/oder, dass die Entladeschaltung (12) keine Versorgungsspannung benötigt und verwendet, um von dem inaktiven Zustand in den entladenden Zustand überzugehen.

3. Schnellladestation nach Anspruch 1 oder 2, **dadurch gekennzeichnet, dass** die Entladeschaltung (12) ein normally closed (NC) Schaltelement (16) aufweist, das in einem Kurzschlusszweig (17) angeordnet ist, über den der Energiespeicher (10) entladen wird.

4. Schnellladestation nach Anspruch 3, **dadurch gekennzeichnet, dass** in dem Kurzschlusszweig (17) ein positive temperature coefficient (PTC) Heizelement (18) angeordnet ist, das durch eine temperaturabhängige Erhöhung des elektrischen Widerstands des Kurzschlusszweigs (17) einen Entladestrom des Energiespeichers (10) begrenzt.

5. Schnellladestation nach einem der vorhergehenden Ansprüche, **dadurch gekennzeichnet, dass** die Stromrichteranordnung (9) einen AC/DC Wandler (14), einen DC/DC Wandler (13) und ausgangsseitig des AC/DC Wandlers (14) sowie eingangsseitig des DC/DC Wandlers (13) einen Verbindungskreis (19) aufweist, vorzugsweise, dass der DC/DC Wandler (13) galvanisch trennt, und/oder, dass zwischen der Stromrichteranordnung (9) und einem Anschlusspunkt (2) der Schnellladestation (1) eine Diode (20) angeordnet ist.

6. Schnellladestation nach Anspruch 5, **dadurch gekennzeichnet, dass** ein Energiespeicher (10) mit Entladeschaltung (12) eingangsseitig der galvanischen Trennung und/oder ausgangsseitig der galvanischen Trennung, insbesondere vor der Diode (20), angeordnet ist.

7. Schnellladestation nach Anspruch 5 oder 6, **dadurch gekennzeichnet, dass** die Steuereinheit (15) in einer Abschaltroutine den Energiespeicher (10) durch ein Ansteuern von Schaltelementen (21) des DC/DC Wandlers (13) und/oder des AC/DC Wandlers (14) entlädt, dass die Steuereinheit (15) bei dem Ausfall die Abschaltroutine nicht durchführt und vorzugsweise die Schaltelementen (21) DC/DC Wandlers (13) und/oder des AC/DC Wandlers (14) nicht weiter ansteuert, weiter vorzugsweise, dass die Schaltelemente (21) des DC/DC Wandlers (13) und/oder des AC/DC Wandlers (14) normally open (NO) Schaltelemente (21) sind.

8. Schnellladestation nach einem der vorhergehenden Ansprüche, **dadurch gekennzeichnet, dass** die Schnellladestation (1) mindestens ein Leistungsmodul (3) aufweist, das die Stromrichteranordnung (9) aufweist, vorzugsweise, dass die Schnellladestation (1) mehrere Leistungsmodule (3) mit Stromrichteranordnungen (9) aufweist, weiter vorzugsweise, dass die Leistungsmodule (3) flexibel auf mindestens zwei Anschlusspunkte (2) der Schnellladestation (1) verteilbar sind.

9. Schnellladestation nach einem der Ansprüche 5 bis 8, **dadurch gekennzeichnet, dass** das Leistungsmodul (3) mindestens eine Überwachungsschaltung (38) aufweist, die insbesondere einen Strom und/oder eine Spannung und/oder eine Temperatur überwacht und bei Überschreiten eines Grenzwertes ein Abschaltsignal erzeugt, vorzugsweise, dass das Abschaltsignal zu einer Notabschaltung der Steuereinheit (15) führt und daher die Entladeschaltung (12) automatisch in den entladenden Zustand übergeht.

10. Schnellladestation nach Anspruch 9, **dadurch gekennzeichnet, dass** das Leistungsmodul (3) mindestens zwei galvanisch getrennte Überwachungsschaltungen (38) aufweist, die jeweils insbesondere einen Strom und/oder eine Spannung und/oder eine Temperatur überwachen und bei Überschreiten eines Grenzwertes ein Abschaltsignal erzeugen, vorzugsweise, dass jedes der Abschaltsignale zu einer Notabschaltung der Steuereinheit (15) führt und daher die Entladeschaltung (12) automatisch in den entladenden Zustand übergeht.

11. Schnellladestation nach Anspruch 10, **dadurch gekennzeichnet, dass** eine der galvanisch getrennten Überwachungsschaltungen (38) eingangsseitig der galvanischen Trennung des DC/DC Wandlers (13) und eine der galvanisch getrennten ausgangsseitig der galvanischen Trennung des DC/DC Wandlers (13) angeordnet ist, dass ein Abschaltsignal der ausgangsseitig der galvanischen Trennung des DC/DC Wandlers (13) angeordneten Überwachungsschaltung (38) ein Abschaltsignal an eine Treiberstufe der Ausgangsseite (23) des DC/DC Wandlers (13) sendet, die in Reaktion auf das Abschaltsignal abschaltet, dass in Reaktion auf das Abschalten der Treiberstufe der Ausgangsseite (23) des DC/DC Wandlers (13) die Überwachungsschaltung (38) eingangsseitig der galvanischen Trennung des DC/DC Wandlers (13) eine Überschreitung des Grenzwerts detektiert und ein Abschaltsignal erzeugt.

12. Schnellladestation nach Anspruch 8 und einem der Ansprüche 9 bis 11, **dadurch gekennzeichnet, dass** die Leistungsmodule (3) je mindestens eine Überwachungsschaltung (38) aufweist, die bei einer Überschreitung eines Grenzwertes des Ausgangsstroms des Leistungsmoduls (3) ein Abschaltsignal erzeugt, dass die Grenzwerte der Überwachungsschaltungen (38) der Leistungsmodule (3) in Summe maximal 10 % über einem Grenzwert eines Anschlusspunktes (2) liegen, vorzugsweise in Summe maximal den Grenzwert des Anschlusspunktes (2) ergeben, weiter vorzugsweise in Summe unter dem Grenzwert des Anschlusspunktes (2) liegen.

13. Schnellladestation nach einem der Ansprüche 8 bis 12, **dadurch gekennzeichnet, dass** die Leistungsmodule (3) ausgangsseitig bidirektional miteinander verbindbar sind, dass bei einer Notabschaltung mindestens eines Leistungsmoduls (3), insbesondere der Schnellladestation (1), mindestens ein Leistungsmodul (3) über eine Entladeschaltung (12) des Leistungsmoduls (3) einen Energiespeicher (10) eines anderen Leistungsmoduls (3), insbesondere nur teilweise zugleich mit einer Entladeschaltung (12) des anderen Leistungsmoduls (3), entlädt.

14. Verfahren zum Betrieb einer Schnellladestation (1) für Elektrofahrzeuge nach einem der vorhergehenden Ansprüche, wobei die Schnellladestation (1) eine Stromrichteranordnung (9) zur Wandlung einer Wechselspannung als Eingangsspannung der Schnellladestation (1) in eine Gleichspannung als Ausgangsspannung der Schnellladestation (1) aufweist, wobei die Stromrichteranordnung (9) mindestens einen Energiespeicher (10) aufweist,
**dadurch gekennzeichnet,**
**dass** die Stromrichteranordnung (9) eine mit dem Energiespeicher (10) zum Entladen des Energiespeichers (10) verbundene Entladeschaltung (12) aufweist, dass die Entladeschaltung (12) standardmäßig in einem entladenden Zustand ist, in dem der Energiespeicher (10) über die Entladeschaltung (12) entladen wird, dass die Entladeschaltung (12) von einer Steuereinheit (15) im Betrieb der Stromrichteranordnung (9) aktiv in einen inaktiven Zustand gebracht wird, in dem die Entladeschaltung (12) den Energiespeicher (10) nicht entlädt, und, dass die Entladeschaltung (12) bei einem Ausfall, insbesondere einer Notabschaltung, der Steuereinheit (15) automatisch in den entladenden Zustand übergeht.
